## Europäisches Patentamt
## European Patent Office
## Office européen des brevets

(19)

(11) Veröffentlichungsnummer: **0 012 362**
**B1**

(12) # EUROPÄISCHE PATENTSCHRIFT

(45) Veröffentlichungstag der Patentschrift:
**12.08.81**

(51) Int. Cl.³: **C 04 B 7/44**

(21) Anmeldenummer: **79104951.3**

(22) Anmeldetag: **05.12.79**

(54) Verfahren zur Wärmebehandlung von feinkörnigem Gut.

(30) Priorität: **06.12.78 DE 2852754**

(43) Veröffentlichungstag der Anmeldung:
**25.06.80 Patentblatt 80/13**

(45) Bekanntmachung des Hinweises auf die Patenterteilung:
**12.08.81 Patentblatt 81/32**

(84) Benannte Vertragsstaaten:
**DE FR GB IT**

(56) Entgegenhaltungen:
**DD-A-111 673**
**DE-A1-2 621 872**
**DE-A1-2 624 971**
**DE-A1-2 751 876**
**DE-B2-2 324 565**

(73) Patentinhaber: **Krupp Polysius AG,
Graf-Galen-Strasse 17, D-4720 Beckum (DE)**

(72) Erfinder: **Goldmann, Wolf, Agnes-Miegel-Strasse 9,
D-4720 Beckum (DE)**
Erfinder: **Rother, Wolfgang, Anton-Aulke-Weg 4,
D-4742 Stromberg (DE)**

(74) Vertreter: **Tetzner, Volkmar, Dr.-Ing. Dr. jur.,
Van-Gogh-Strasse 3, D-8000 München 71 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Wärmebehandlung von feinkörnigem Gut

Die Erfindung betrifft ein Verfahren zur Wärmebehandlung von feinkörnigem Gut, insbesondere Zementrohmehl, das in einem mehrstufigen Zyklonvorwärmer mit den heißen Abgasen eines Drehrohrofens vorgewärmt, durch an mehreren Stellen des Zyklonvorwärmers zugegebenen zusätzlichen festen Brennstoff weiter erhitzt, insbesondere kalziniert, und im Drehrohrofen fertig gebrannt wird.

Um den Drehrohrofen von Wärmearbeit zu entlasten und dadurch kleiner dimensionieren zu können, ist es bekannt, in die unterste Stufe des Vorwärmers zusätzlichen Brennstoff einzuführen, so daß das durch die Ofenabgase bereits vorgewärmte Gut weiter erhitzt (Zementrohmaterial insbesondere weitgehend kalziniert) wird, ehe es anschließend in den Drehrohrofen gelangt (vgl. DE-B2-2 324 565).

Für die Übertragung der in diesem zusätzlichen Brennstoff enthaltenen Wärmeenergie auf das Gut steht dabei nur eine verhältnismäßig kurze Zeit zur Verfügung. Es kommt deshalb darauf an, Brennstoff und Gut in der untersten Stufe des Vorwärmers möglichst rasch und gleichmäßig zu vermischen und dann eine nahezu vollständige Verbrennung des Brennstoffes an bzw. in unmittelbarer Nähe der Gutteilchen zu erreichen.

Soweit flüssiger oder gasförmiger Brennstoff eingesetzt wird, bereitet die Erfüllung der genannten Bedingungen keine wesentlichen Schwierigkeiten. Anders ist es dagegen bei Verwendung von festem Brennstoff. Um eine genügend rasche und gleichmäßige Verbrennung des Brennstoffes in der untersten Stufe des Vorwärmers zu erzielen, muß der feste Brennstoff vorher getrocknet und mehlfein gemahlen werden, was hohe Aufbereitungskosten verursacht.

Weitere Schwierigkeiten tauchen auf, wenn minderwertiger Brennstoff mit einem hohen Gehalt an nicht brennbaren Bestandteilen eingesetzt werden soll. So hat man beispielsweise verursacht (DE-A1-2 621 872), Abfallbrennstoff, wie ölhaltige Bleicherde, in die Gasleitung zwischen Drehrohrofen und Zyklonwärmetauscher, vorzugsweise in das Einlaufgehäuse des Drehrohrofens, einzuführen. Dabei erfolgt die Aufgabe dieses Abfallbrennstoffes so nahe zum Ofeneinlauf hin, daß einerseits eine sichere Zündung der flüchtigen Bestandteile (unter Vermeidung von Abgasverlusten und Explosionen in nachgeschalteten Anlagen) gewährleistet ist und andererseits starke Ankrustungen und dadurch bedingte Querschnittsverengungen am Ofeneinlauf vermieden werden. Bei diesem Verfahren läßt sich jedoch nicht ausschließen, daß eine beträchtliche Menge nicht brennbarer, kalter Stoffe als Bestandteil der Brennstoff-Gut-Mischung in die unterste Stufe des Vorwärmers und unmittelbar darauf in den Drehrohrofen gelangt, was die angestrebte hohe Kalzinierung des Gutes vor Eintritt in den Drehrohrofen wesentlich beeinträchtigt.

Es wurde weiterhin auch schon vorgeschlagen (DE-A1-2 751 876), feste, flüssige oder gasförmige Brennstoffe an drei verschiedenen Stellen im Bereich der untersten Stufe eines fünfstufigen Zyklonvorwärmers zuzugeben, und zwar in die Gasleitung zwischen Drehrohrofen und unterster Zyklonstufe, in die Zyklone der untersten Stufe sowie in die von der untersten Stufe zur nächsten Stufe des Vorwärmers führenden Gasleitungen. Soweit hierbei grobkörnige Kohle eingesetzt wird, erfolgt deren Ausbrand im wesentlichen erst im Drehrohrofen. Wird daher grubenfeuchte, grobstückige Kohle (oder ein anderer Brennstoff von hoher Korngröße und Feuchtigkeit sowie geringer Reaktivität) verwendet, so gelangt ein beträchtlicher Anteil von noch kaltem Brennstoff in den Drehrohrofen, was eine hohe Kalzinierung des Gutes vor Eintritt in den Drehrohrofen ausschließt.

Der Erfindung liegt daher die Aufgabe zugrunde, unter Vermeidung der geschilderten Schwierigkeiten ein Verfahren der eingangs genannten Art so auszubilden, daß mit besonders geringen Aufbereitungskosten für den eingesetzten festen Brennstoff sowie unter Aufrechterhaltung der Möglichkeit, auch minderwertigen Brennstoff zu verwenden, ein hoher Kalzinierungsgrad des Gutes vor Eintritt in den Drehrohrofen erreicht wird. Dabei soll durch die Erfindung auch die Möglichkeit geschaffen werden, das Verfahren unterschiedlichen Brennstoffarten optimal anzupassen.

Diese Aufgabe wird erfindungsgemäß durch die Kombination folgender Merkmale gelöst:

a) Als zusätzlicher Brennstoff wird ein Brennstoffgemisch unterschiedlicher Korngröße verwendet und durch Siebung in eine Feinfraktion und eine Grobfraktion getrennt,

b) die Feinfraktion des Brennstoffs wird in die unterste Stufe des Vorwärmers und die Grobfraktion in eine höhere Stufe des Vorwärmers eingeführt,

c) dabei wird die Stufe des Vorwärmers, in die die Grobfraktion des Brennstoffes eingeführt wird, in Abhängigkeit von Korngröße, Reaktivität, Feuchtigkeit und Gehalt des Brennstoffes an nicht brennbaren Bestandteilen so gewählt, daß der Brennstoff (Grobfraktion und Feinfraktion) nahezu vollständig (mindestens 90%) in der untersten Stufe des Vorwärmers verbrennt.

Indem beim erfindungsgemäßen Verfahren das Brennstoffgemisch in eine Feinfraktion und eine Grobfraktion zerlegt und die Grobfraktion in eine höhere Stufe des Vorwärmers eingeführt wird, erreicht man, daß die groben Brennstoffpartikel beim Durchwandern der einzelnen Stufen des Vorwärmers zunächst ausreichend entwässert und vorgewärmt werden, so daß sie dann in der untersten Stufe des Vorwärmers — zusammen mit der dort eingeführten Feinfraktion des Brennstoffes — nahezu vollständig verbrennen können. Durch diese Vorwärmung der Grobfraktion des Brennstoffes wird deren Reaktivität wesentlich erhöht, so daß die Grobfraktion der Kohle die in ihr enthaltene Wärme in der untersten Stufe des Vorwärmers in einer sehr kurzen Reaktionszeit für den Kalzinationsprozeß freisetzen kann. Da die Wärme für die Vorwärmung der Grobfraktion des Brennstoffes überwiegend aus dem Niedertemperaturbereich des Verfahrens entnommen wird, der ohnehin im Zyklonvorwärmer nicht voll ausgenutzt werden kann, ergibt sich eine beachtliche Wärmeersparnis gegenüber der bisher üblichen Verfahrensweise, bei der der gesamte Vorkalzinations-Brennstoff in der untersten Stufe des Vorwärmers zugeführt wird.

Ein besonders vorteilhafter Begleiteffekt des erfindungsgemäßen Verfahrens besteht darin, daß die Brennstoffpartikel der Grobfraktion bei der Durchfallbewegung durch die einzelnen Zyklone und Rohrleitungen des Vorwärmers etwa vorhandene Ansätze abschlagen und damit einen sehr erwünschten Reinigungseffekt ausüben.

Die Wahl der Stufe des Vorwärmers, in die die Grobfraktion des Brennstoffes eingeführt wird, hängt nicht nur von Korngröße, Feuchtigkeit und Gehalt des Brennstoffes an nicht brennbaren Bestandteilen ab, sondern auch von der Reaktivität des Brennstoffes, insbesondere vom Gehalt des Brennstoffes an flüchtigen, brennbaren Bestandteilen. Je geringer dieser Gehalt an flüchtigen, brennbaren Bestandteilen ist, umso höher im Vorwärmer wird die Grobfraktion des Brennstoffes eingeführt.

Die Stückigkeit des festen Brennstoffes kann bis zu etwa 50 mm betragen. Dabei wird zumindest der Teil des Brennstoffes, dessen Korngröße über 3 mm liegt, in die oberste Stufe des Vorwärmers eingeführt. Eine zweckmäßige Ausgestaltung des erfindungsgemäßen Verfahrens sieht vor, den Brennstoff unter Verwendung eines 2 mm-Siebes zu sieben und die Grobfraktion in die oberste Stufe des Vorwärmers einzuführen.

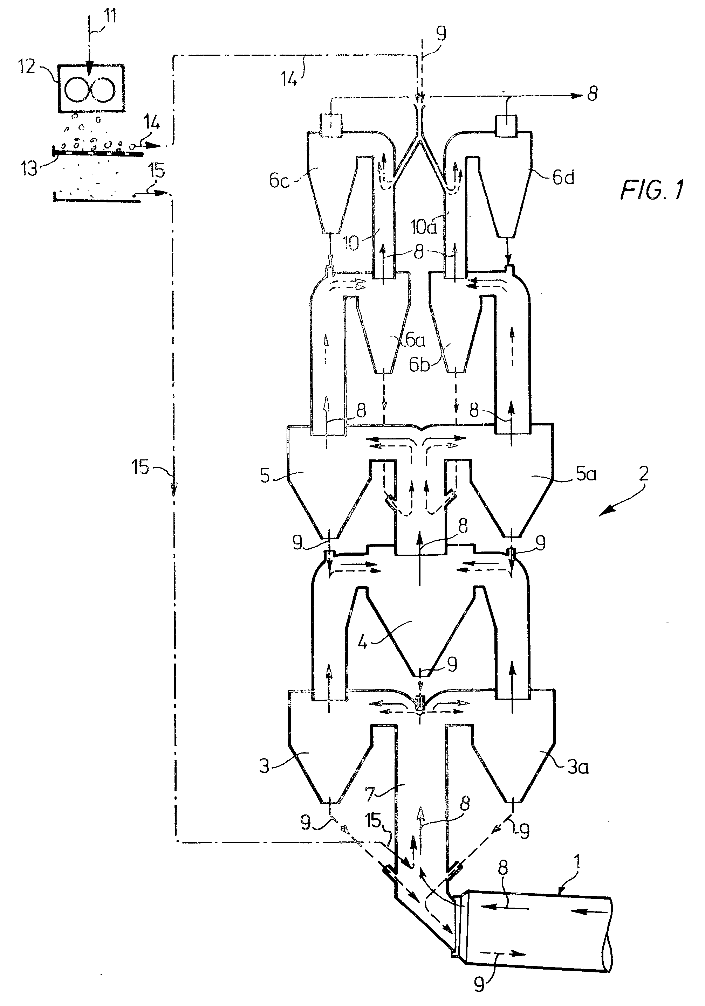

Ein Ausführungsbeispiel einer Anlage zur Durchführung des erfindungsgemäßen Verfahrens ist in Fig. 1 der Zeichnung schematisch veranschaulicht.

Die dargestellte Anlage zur Wärmebehandlung von Zement-Rohmehl enthält einen Drehrohrofen 1 und einen mehrstufigen Zyklonvorwärmer 2, bestehend aus einer untersten (ersten) Stufe mit den Zyklonen 3, 3a, einer zweiten Stufe mit dem Zyklon 4, einer dritten Stufe mit den Zyklonen 5, 5a, einer vierten Stufe mit den Zyklonen 6a, 6b und einer fünften Stufe mit den Zyklonen 6c, 6d.

Der Drehrohrofen 1 steht mit den Zyklonen 3, 3a der untersten Stufe durch eine die Ofenabgase führende Gasleitung 7 in Verbindung. Im übrigen sind die einzelnen Zyklone des Vorwärmers 2 wie aus der Zeichnung ersichtlich durch Gas- und Gutleitungen miteinander verbunden.

Der Strömungsweg der Gase ist durch voll ausgezogene Pfeile 8 und der Weg des Gutes durch gestrichelte Pfeile 9 gekennzeichnet.

Das Gut (Zement-Rohmehl) wird in die zu den Zyklonen 6c, 6d der obersten Stufe führenden Gasleitungen 10, 10a aufgegeben und durchwandert dann nacheinander in bekannter Weise die fünf Stufen des Vorwärmers 2, wobei es von den Abgasen des Drehrohrofens 1 vorgewärmt wird.

Um das Gut vor Eintritt in den Drehrohrofen 1 möglichst weitgehend zu kalzinieren (Austreibung des $CO_2$ aus dem Kalziumkarbonat), wird in den Vorwärmer 2 außer dem Abgas des Drehrohrofens 1 noch zusätzlicher fester Brennstoff eingeführt. Bei dem dargestellten Ausführungsbeispiel wird der stückige, grubenfeuchte Brennstoff (Pfeil 11) zunächst in einem Brecher 12 grob vorgebrochen und dann auf einem Sieb 13 in eine Grob- und Feinfraktion zerlegt. Die Grobfraktion (Pfeile 14) gelangt zusammen mit dem Rohmehl in die zu den Zyklonen 6c, 6d der obersten Stufe des Vorwärmers führenden Gasleitungen 10, 10a. Die Feinfraktion (Pfeile 15) wird in die vom Drehrohrofen 1 zu den Zyklonen 3, 3a der untersten Stufe des Vorwärmers führende Gasleitung 7 eingeführt.

Die in die oberste Stufe des Vorwärmers eingebrachten groben Brennstoffpartikel durchwandern mit dem Gut nacheinander die einzelnen Stufen des Vorwärmers, werden hierbei entwässert und so weit vorgewärmt, daß sie schließlich zusammen mit der in die unterste Vorwärmstufe eingebrachten Feinfraktion hier nahezu vollständig verbrennen.

Zur weiteren Erläuterung der Erfindung diene folgendes

<div align="center">Beispiel</div>

Verwendung findet ein Rohmehl folgender Analyse:

Rohmehl incl. 10% Kohle

| | |
|---|---|
| Glühverlust | 34,38% |
| $SiO_2$ | 13,77 |
| $Al_2O_3$ | 4,08 |
| $TiO_2$ | 0,13 |
| $Fe_2O_3$ | 1,98 |
| CaO | 41,31 |
| MgO | 2,81 |
| $SO_3$ | 0,57 |
| $P_2O_5$ | 0,08 |
| $Na_2O$ | 0,18 |
| $K_2O$ | 0,78 |
| Cl | 0,007 |
| | |
| Silikat-Modul | 2,22 |
| Tonerde-Modul | 2,13 |
| Kalkstandard | 92,7 |

Die Analyse der verwendeten Kohle ist wie folgt:

| | |
|---|---|
| Feuchtigkeit | 0,4% |
| flüchtige Bestandteile | 5,3% |
| Asche | 68,6% |
| fester Brennstoff | 25,7% |
| | 100,0% |

Elementar-Analyse

| | |
|---|---|
| Asche | 68,6% |
| C | 25,6% |
| H | 0,6% |
| S | 1,9% |
| O + N | 3,3% |
| | 100,0% |

| | |
|---|---|
| Heizwert (Hu) Lufttrocken | 9285 kJ/kg |

Diese Kohle verläßt den Feinbrecher mit einer Körnung bis zu 25 mm, wobei rund 20% unter 3 mm liegen.

Die Chemie der Rohmischung erfordert 0,155 kg Kohle pro kg Klinker. Davon werden 0,125 kg Kohle/kg Klinker gemeinsam mit dem Rohmehl und 0,030 kg Kohle pro kg Klinker in die vom Drehrohrofen zur untersten Zyklonstufe führende Gasleitung aufgegeben.

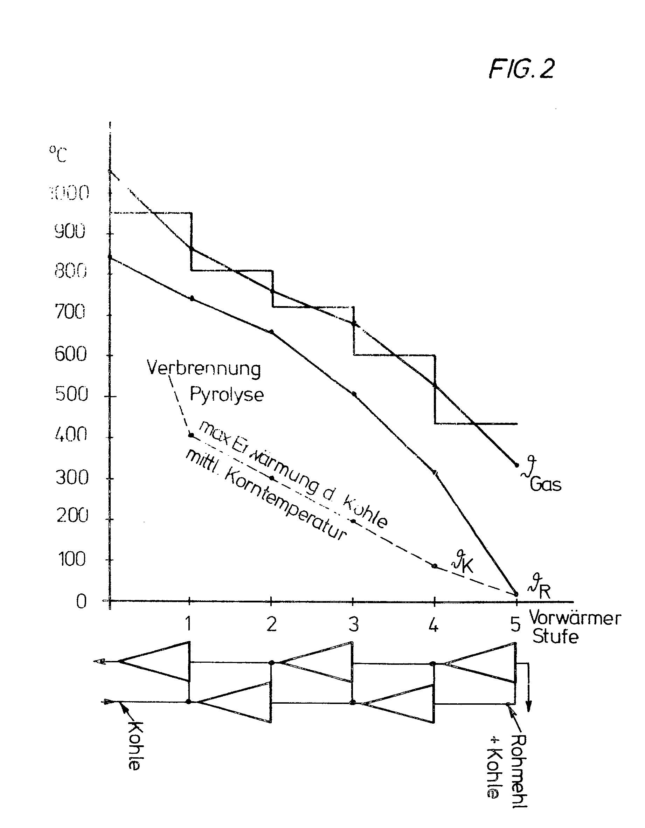

Setzt man nun dieses Rohmaterial sowie diesen Brennstoff in der Anlage gemäß Fig. 1 ein und mißt die Temperatur des Gases ($\vartheta$ Gas), die Temperatur des Rohmateriales ($\vartheta$ R) sowie die Temperatur der Kohle ($\vartheta$ K) in den fünf Zyklonstufen, so ergibt sich das in Fig. 2 dargestellte Temperaturprofil des Vorwärmers.

Wie aus der Literatur bekannt ist (vgl. etwa VDI-Bericht Nr. 211 (1974), S. 131 ff), werden vor der Verbrennung der Kohle flüchtige brennbare Bestandteile abgespalten. Bei gasreichen Kohlen spielt sich dieser Vorgang schon bei niedrigeren Temperaturen als bei gasarmer Kohle ab.

Der Brennstoff kann daher bis zum Einsetzen der Entgasung vorgewärmt werden. Die Trennkorngröße für die geteilte Brennstoffzufuhr des erfindungsgemäßen Verfahrens wird also entscheidend durch die Qualität des Brennstoffes bestimmt. Bei gasreicher Kohle liegt die minimale Korngröße für die gemeinsame Aufgabe der Grobfraktion mit dem Rohmehl höher als bei gasarmer Kohle. Im obigen Beispiel liegt die Trennkorngröße bei 3 mm; für dieses Korn liegt damit bei der im obigen Beispiel eingesetzten, gasarmen Kohle die maximale mittlere Erwärmungstemperatur noch beträchtlich unter der Temperatur, bei der Pyrolyse einsetzt.

Ein wesentlicher Vorteil der Vorwärmung eines Teiles des Brennstoffes liegt in der Erhöhung der Reaktivität der Kohle, die dann in kürzerer Reaktionszeit die Wärme für den Kalzinationsprozeß freisetzt. Die Vorwärmung des Brennstoffes bringt im obigen Beispielsfall eine Ersparnis im Wärmeverbrauch bis zu 80 kJ/kg Klinker. Da die Wärme für die Vorwärmung des Brennstoffes überwiegend aus dem Niedertemperaturbereich des Verfahrens entnommen wird, der ohnehin im Vorwärmer nicht voll ausgenutzt werden kann, ergibt sich eine beachtliche Wärmeersparnis gegenüber der bisher üblichen Verfahrensweise, bei der der gesamte Vorkalzinations-Brennstoff in der untersten Stufe des Vorwärmers zugeführt wird. Bei dieser bekannten Verfahrensweise wird nämlich die Wärme für die Brennstoff-Vorwärmung aus dem Hochtemperaturbereich des Prozesses entnommen; sie fehlt dann dem Kalzinier-Prozeß und muß mit rund 35% höherem Wärmewert wieder zugefeuert werden, um die zusätzlichen Abgasverluste zu decken.

Der wesentliche Vorteil des erfindungsgemäßen Verfahrens liegt damit in einer besseren Brennstoff-Ausnützung. Dabei läßt sich der gleiche Kalziniergrad wie bei der bekannten Verfahrensweise erzielen (der Kalziniergrad ist eine Funktion von Brennstoffmenge und Reaktionsverhalten des Rohmateriales). Im obigen Beispiel mit ca. 45% Vorkalzinations-Brennstoff liegt der Entsäuerungsgrad bei über 90%.

## Patentansprüche

1. Verfahren zur Wärmebehandlung von feinkörnigem Gut, insbesondere Zementrohmehl, das in einem mehrstufigen Zyklonvorwärmer mit den heißen Abgasen eines Drehrohrofens vorgewärmt, durch an mehreren Stellen des Zyklonvorwärmers zugegebenen zusätzlichen festen Brennstoff weiter erhitzt, insbesondere kalziniert, und im Drehrohrofen fertig gebrannt wird, gekennzeichnet durch die Kombination folgender Merkmale:

a) Als zusätzlicher Brennstoff wird ein Brennstoffgemisch unterschiedlicher Korngröße verwendet und durch Siebung in eine Feinfraktion und eine Grobfraktion getrennt,

b) die Feinfraktion des Brennstoffs wird in die unterste Stufe des Vorwärmers und die Grobfraktion in eine höhere Stufe des Vorwärmers eingeführt,

c) dabei wird die Stufe des Vorwärmers, in die die Grobfraktion des Brennstoffes eingeführt wird, in Abhängigkeit von Korngröße, Reaktivität, Feuchtigkeit und Gehalt des Brennstoffes an nicht brennbaren Bestandteilen so gewählt, daß der Brennstoff (Grobfraktion und Feinfraktion) nahezu vollständig (mindestens 90%) in der untersten Stufe des Vorwärmers verbrennt.

2. Verfahren nach Anspruch 1, dadurch gekennzeichnet, daß zumindest der Teil des Brennstoffes, dessen Korngröße über 3 mm liegt, in die oberste Stufe des Vorwärmers eingeführt wird.

3. Verfahren nach Anspruch 2, dadurch gekennzeichnet, daß der Brennstoff unter Verwendung eines 2 mm-Siebes gesiebt und die Grobfraktion in die oberste Stufe des Vorwärmers eingeführt wird.

## Claims

1. Method of heat-treating fine-grain material, in particular cement raw meal, which is preheated in a multi-stage cyclone preheater with the hot waste gases of a rotary kiln, further heated, in particular calcined by additional solid fuel introduced at several points of the cyclone preheater, and completely burnt in the rotary kiln, characterised by the combination of the following features:

a)  As additional fuel a fuel mixture of varied grain size is used and separated by screening into a fine fraction and a coarse fraction,

b)  the fine fraction of the fuel is introduced into the lowermost stage of the preheater and the coarse fraction into a higher stage of the preheater,

c)  the stage of the preheater into which the coarse fraction of the fuel is introduced is chosen in dependence upon grain size, reactivity, moisture content and the content of the fuel of non-combustible constituents so that the fuel (coarse fraction and fine fraction) burns almost completely (at least 90%) in the lowermost stage of the preheater.

2. Method according to claim 1, characterised in that at least the portion of the fuel whose grain size is above 3 mm is introduced into the uppermost stage of the preheater.

3. Method according to claim 2, characterised in that the fuel is screened using a 2 mm screen and the coarse fraction is introduced into the uppermost stage of the preheater.

## Revendications

1. Procédé de traitement thermique de matière à granulométrie fine, en particulier de farine crue de ciment, qui passe dans un réchauffeur à cyclones à plusieurs étages dans lequel elle est exposée aux gaz chauds d'échappement d'un four tubulaire rotatif et qu'un complément de combustible solide introduit en plusieurs emplacements dans le réchauffeur à cyclones échaffe davantage encore et en particulier la calcine, puis dont la cuisson est achevée dans le four tubulaire rotatif, procédé caractérisé par la combinaison des particularités suivantes:

a)  le complément de combustible utilisé est un mélange ayant différentes granulométries et séparé par tamisage en une fraction à granulométrie fine et une fraction à grosses particules,

b)  la fraction à granulométrie fine du combustible est introduite dans l'étage inférieur du réchauffeur et la fraction à grosses particules est introduite dans un étage supérieur du réchauffeur,

c)  l'étage du réchauffeur dans lequel la fraction à grosses particules du combustible est introduite est adopté en fonction de la granulométrie, de la réactivité, de l'humidité et la teneur de ce combustible en composants non combustibles de manière que ce combustible (la fraction à grosses particules et la fraction à granulométrie fine) brûle à peu près totalement (au moins à 90%) par l'étage inférieur du réchauffeur.

2. Procédé selon la revendication 1, caractérisé en ce qu'au moins la partie du combustible dont la granulométrie est supérieure à 3 mm est introduite dans l'étage supérieur du réchauffeur.

3. Procédé selon la revendication 2, caractérisé en ce qu'il consiste à faire passer le combustible sur un tamis à 2 mm d'ouverture de mailles et à diriger la fraction à grosses particules dans l'étage supérieur du réchauffeur.

FIG.1

FIG.2